# EUROPEAN PATENT APPLICATION

(11) **EP 2 667 489 A2**
(43) Date of publication of application: **27.11.2013**
(21) Application number: 13168029.0
(22) Date of filing: 16.05.2013
(51) Int. Cl.: H02K 3/52

(54) **Motor**

(30) Priority: 23.05.2012 JP 2012117440
(71) Applicant: JTEKT CORPORATION, Osaka-shi Osaka 542-8502 (JP)
(72) Inventor: Hiramitsu, Akira, Osaka-shi, Osaka 542-8502 (JP)
(74) Representative: Winter, Brandl, Fürniss, Hübner, Röss, Kaiser, Polte - Partnerschaft

(57) **Abstract**

A motor includes a plate-like insulating member (33) that is interposed between coils located next to each other in the circumferential direction. Elastically deformable small protrusions (48), which protrude radially inward, are formed at an inner side portion (42) of the insulating member (33), the inner side portion (42) contacting inner covering portions (25) of the insulators (17). The small protrusions (48) are formed such that the insulating member (33) is allowed to be inserted between the coils from the axial direction when the small protrusions (48) are elastically deformed and the small protrusions (48) are engaged with axial end faces of the inner covering portions (25).

## Description

### BACKGROUND OF THE INVENTION

### 1. Field of the Invention

The invention relates to a motor.

### 2. Discussion of Background

Conventionally, there have been widely used motors in which coils are formed by winding wires around teeth of a stator via insulators. Usually, an insulating coating is applied to the outer periphery of each wire. In some motors, insulating members are interposed between coils (i.e., the insulating members are arranged in slots between the coils) in order to reliably insulate the adjacent coils from each other (especially when a high voltage is applied to the coils).

For example, Japanese Patent Application Publication No. 2011-72128 (JP 2011-72128 A) describes a motor in which film-like insulating members (interphase insulating members), each having a V-shape when viewed from the axial direction of the motor, are interposed between coils. In this motor, axial ends of a vertex portion of each V-shaped insulating member are engaged with respective projecting portions formed on insulators. This configuration restricts axial displacement of the insulating members due to, for example, vibration of the coils, which may occur when the coils are energized.

The motor described in JP 2011-72128 A has a configuration in which the projecting portions are formed on the insulators, at positions corresponding to the respective axial ends of the insulating member. Therefore, when an attempt is made to insert the insulating member into the slot from the axial direction, the vertex portion of the insulating member interferes with the projecting portion, which makes it impossible to insert the insulating member into the slot from the axial direction. Therefore, for example, each insulating member needs to be placed on the radially inner side of the teeth and then inserted between the adjacent coils through a clearance (slot opening) between the distal ends of the adjacent teeth. Therefore, the work of assembling the insulating members to the motor becomes cumbersome. As a result, it becomes difficult to automate the work of assembling the insulating members to the motor with the use of an assembly device.

Japanese Patent Application Publication No. 2011-130566 (JP 2011-130566 A) describes a motor in which each of insulating members is formed into a flat-plate shape, a projecting portion, which projects radially outward from one axial end portion of the insulating member, is formed, and the projecting portion is sandwiched between a lead wire of a coil and one axial end face of an insulator. With this configuration, axial displacement of the insulating members is restricted. In this motor, after each insulating member is inserted between the coils, the projecting portion of the insulating member is sandwiched between the coil lead wire and the insulator. Thus, it is possible to insert the insulating member between the coils from the axial direction while restricting axial displacement of the insulating members. However, with this configuration, it is necessary to fix the lead wire accurately at a predetermined position in order to reliably fix the insulating member. As a result, the work of assembling the motor becomes cumbersome.

### SUMMARY OF THE INVENTION

The invention provides a motor that is configured such that axial displacement of an insulating member is restricted and that is easily assembled.

According to a feature of an example of the invention, there is provided a motor including a stator that has a stator core provided with a plurality of teeth extending in a radial direction, and coils that are formed by winding wires around the teeth via insulators through concentrated winding, wherein: each of the insulators includes side face covering portions that cover circumferential side faces of a corresponding one of the teeth, inner covering portions that extend in a circumferential direction from respective radially inner end portions of the side face covering portions, and outer covering portions that extend in the circumferential direction from respective radially outer end portions of the side face covering portions; a plate-like insulating member is interposed between the coils located next to each other in the circumferential direction; an elastically deformable small protrusion is formed at at least one of an inner side portion of the insulating member, the inner side portion contacting the inner covering portion, and an outer side portion of the insulating member, the outer side portion contacting the outer covering portion; and the small protrusion is formed such that the insulating member is allowed to be inserted between the coils from an axial direction when the small protrusion is elastically deformed and movement of the insulating member is restricted when the small protrusion is engaged with the insulator.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view of a motor according to an embodiment of the invention, which is perpendicular to the axial direction of the motor;
FIG. 2 is a schematic developed view showing the side structure of a stator according to the embodiment, as viewed from the radially inner side of the stator;
FIG. 3 is an enlarged sectional view showing portions near an insulating member according to the embodiment;
FIG. 4 is a perspective view of the insulating member according to the embodiment;
FIG. 5 is an enlarged sectional view of a small protrusion according to the embodiment, taken along the axial direction;
FIG. 6 is a schematic view showing a process of manufacturing of the insulating member according to the embodiment;
FIG. 7 is an enlarged sectional view of a small protrusion according to another embodiment of the invention, taken along the axial direction; and
FIG. 8 is an enlarged sectional view showing portions near an insulating member according to another embodiment of the invention.

### DETAILED DESCRIPTION OF EMBODIMENTS

Hereinafter, embodiments of the invention will be described with reference to the accompanying drawings.

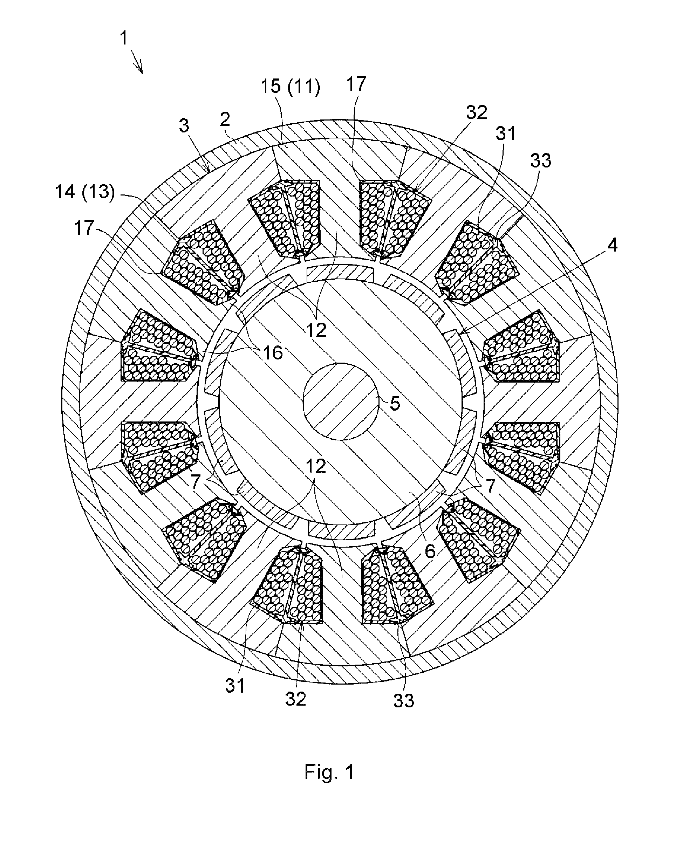

A motor 1 shown in FIG. 1 is installed in, for example, a vehicle, and used as a drive source for an electric power steering system that assists a steering operation or as a drive source for an electric pump device that generates hydraulic pressure. The motor 1 includes a stator 3 housed in a cylindrical case 2, and a rotor 4 that is arranged radially inward of the stator 3 and is rotatably supported. The rotor 4 is formed by fixing a plurality of (ten, in the present embodiment) magnets 7 onto the outer periphery of a rotor core 6 that rotates together with a rotating shaft 5.

The stator 3 has a stator core 13 formed of a cylindrical portion 11 that is fixed to the inner periphery of the case 2, and a plurality of (twelve, in the present embodiment) teeth 12 extending radially inward from the cylindrical portion 11. The cylindrical portion 11 of the stator core 13 in the present embodiment is formed of a plurality of split cores 14 that are split members each having a tooth 12, and that are arranged in the circumferential direction. Each of the split cores 14 has the tooth 12, and a core back 15 that forms the cylindrical portion 11. At the distal end of each of the teeth 12, extending portions 16 are formed so as to extend toward respective sides in the circumferential direction.

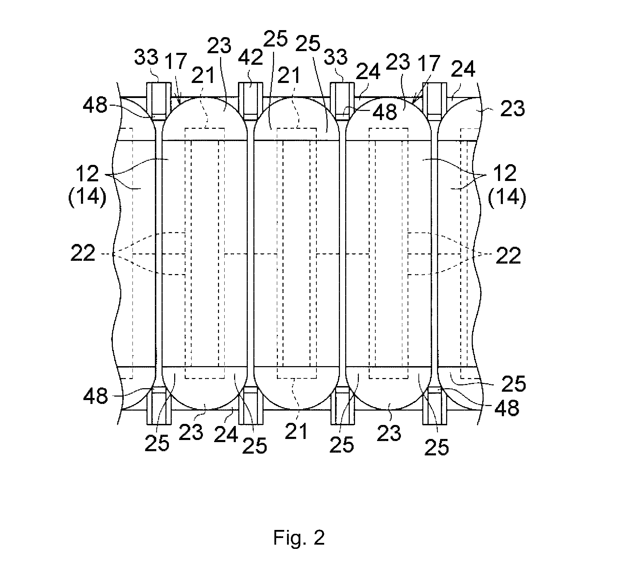

As shown in FIG. 2, each of the split cores 14 is provided with a pair of insulators 17. The insulators 17 are attached to the split core 14 from respective axial sides. Each of the insulators 17 is made of an insulating resin material. Each of the insulators 17 has an end face covering portion 21 that covers one axial end face of the split core 14, and a pair of side face covering portions 22 that extend from the respective circumferential ends of the end face covering portion 21 along the axial direction and that cover respective circumferential side faces of the tooth 12. A generally semicircular inner sticking-out restriction wall 23, which projects along the axial direction, is formed integrally with the radially inner end portion of the end face covering portion 21, and a generally semicircular outer sticking-out restriction wall 24, which projects along the axial direction, is formed integrally with the radially outer end portion of the end face covering portion 21.

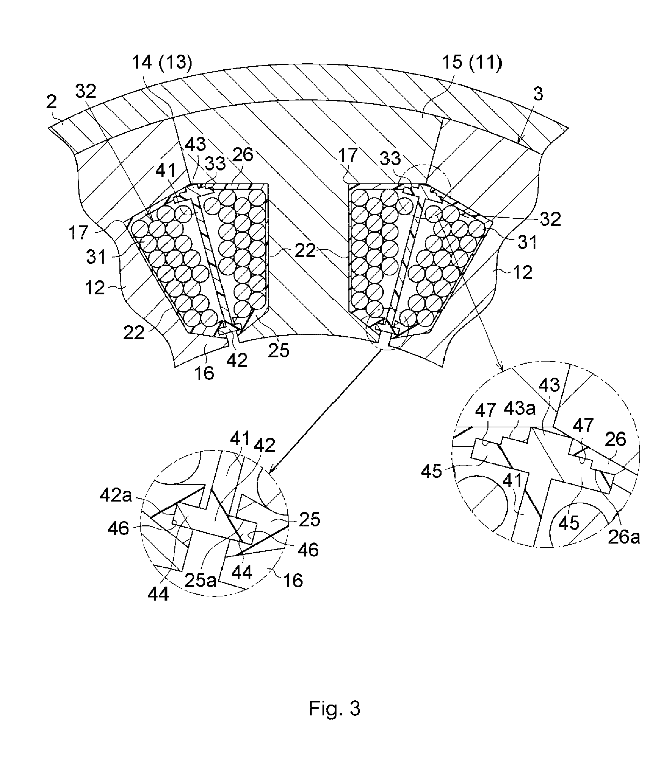

As shown in FIG. 3, an inner covering portion 25, which extends in the circumferential direction and covers the radially outer face of the extending portion 16, is formed integrally with the radially inner end portion of each of the side face covering portions 22, and an outer covering portion 26, which covers the radially inner face of the core back 15, is formed integrally with the radially outer end portion of each of the side face covering portions 22. As shown in FIG. 2, one axial end portion (the upper end portion or the lower end portion in FIG. 2) of each of the inner covering portions 25 is formed so as to project beyond the axial end face of the split core 14 and so as to be continuous with one of the circumferential ends of the inner sticking-out restriction wall 23. Similarly, one axial end portion (the upper end portion or the lower end portion in FIG. 2) of each of the outer covering portions 26 is formed so as to project beyond the axial end face of the split core 14 and so as to be continuous with one of the circumferential ends of the outer sticking-out restriction wall 24.

As shown in FIG. 1, multiple (twelve, in the present embodiment) coils 32 are formed by winding wires 31 around the teeth 12 via the insulators 17. An insulating coating (not shown) is applied the outer periphery of each wire 31. A flat plate-like insulating member 33 is interposed between the coils 32 arranged next to each other in the circumferential direction, thereby ensuring insulation between the coils 32. Each insulating member 33 is made of an insulating resin material.

In the motor 1 configured as described above, the rotor 4 rotates together with the rotating shaft 5 due to magnetic attraction force and repulsion force generated between a magnetic field formed as a drive electric power is supplied to each of the coils 32 and the magnets 7.

Next, the insulating member, and a support structure for the insulating member will be described. As shown in FIG. 3, the insulating member 33 contacts both the insulators 17 that are arranged next to each other in the circumferential direction, at two positions, that is, an inner position and an outer position in the radial direction of the motor 1. The insulating member 33 is interposed between the coils 32 in a state where axial displacement of the insulating member 33 is restricted.

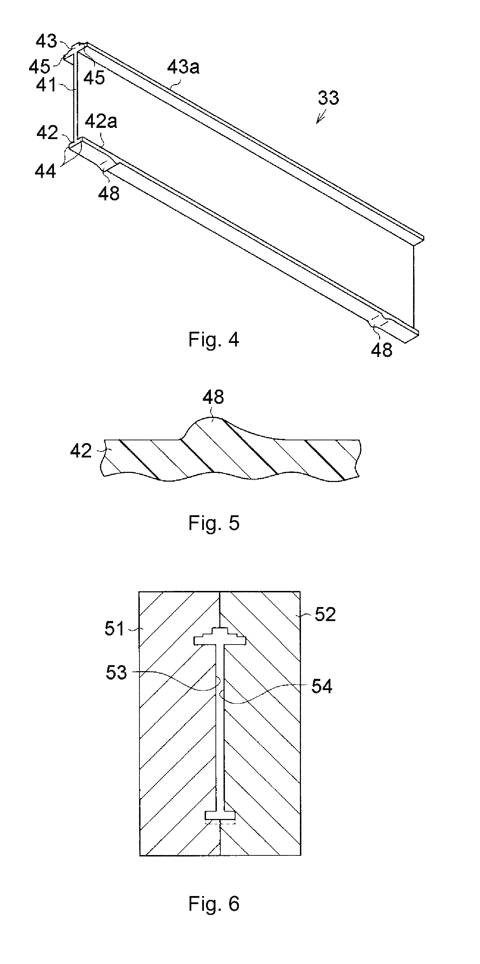

To be more specific, as shown in FIG. 3 and FIG. 4, the insulating member 33 is formed into a generally rectangular plate shape, and has a body portion 41 that faces the coils 32 in the circumferential direction, an inner side portion 42 that is formed on the radially inner side of the body portion 41 and contacts the inner covering portions 25 of the insulators 17, and an outer side portion 43 that is formed on the radially outer side of the body portion 41 and that contacts the outer covering portions 26. As shown in FIG. 2, the insulating member 33 is formed so as to be longer than the stator 3 in the axial direction, and projects in the axial direction beyond the inner sticking-out restriction walls 23 and the outer sticking-out restriction walls 24 of the insulators 17.

As shown in FIG. 3, the circumferential length (plate thickness) of the body portion 41 is slightly smaller than the clearance between the adjacent coils 32 in the circumferential direction, so that the insulating member 33 does not come into contact with the coils 32. The inner side portion 42 has inner tenons 44 that project from the body portion 41 to respective sides in the circumferential direction of the motor 1 and that is a projection which is long in the axial direction. Each inner tenon 44 is formed to have a rectangular sectional shape. The outer side portion 43 has outer tenons 45 that project from the body portion 41 to respective sides in the circumferential direction of the motor 1 and that is a projection which is long in the axial direction. Each outer tenon 45 is formed to have a stepped shape so that the circumferential width of the outer tenon 45 is reduced in a stepwise manner in a direction toward the radially outer side.

The inner covering portions 25 of each insulator 17 has an inner mortice 46 that is open toward both sides in the axial direction and toward the insulating member 33 in the circumferential direction, and the inner tenon 44 is fitted in the inner mortice 46. To be more specific, the inner mortice 46 is formed to have a rectangular sectional shape. The radial length (width) of the inner mortice 46 is equal to the radial length of the inner tenon 44, and the circumferential length (depth) of the inner mortice 46 is equal to the length by which the inner tenon 44 projects in the circumferential direction, so that the wall faces of the inner mortice 46 entirely contact the inner tenon 44. Therefore, a contact face 25a of the inner covering portion 25, which contacts the inner side portion 42, and a contact face 42a of the inner side portion 42, which contacts the inner covering portion 25, are formed into a rectangular shape. In other words, the sectional shape of each of the contact faces 25a, 42a, which is perpendicular to the axial direction of the motor 1, is a labyrinth shape so that the inner side portion 42 is unable to move from the radially outer side to the radially inner side of the inner covering portion 25 when the inner side portion 42 moves only in one direction on the contact face 25a.

The outer covering portion 26 of each insulator 17 has an outer mortice 47 that is open toward both sides in the axial direction, toward the insulating member 33 in the circumferential direction, and toward the radially inner side, and the outer tenon 45 is fitted in the outer mortice 47. To be more specific, the outer mortice 47 is formed to have a stepped sectional shape. The circumferential length of the outer mortice 47 is reduced in a stepwise manner in a direction toward the radially outer side so as to correspond to the shape of the outer tenon 45, and the wall faces of the outer mortice 47 entirely contact the outer tenon 45. Therefore, a contact face 26a of the outer covering portion 26, which contacts the outer side portion 43, and a contact face 43a of the outer side portion 43, which contacts the outer covering portion 26, are formed in a stepwise manner. In other words, the sectional shape of each of the contact faces 26a, 43a, which is perpendicular to the axial direction of the motor 1, is a labyrinth shape so that the outer side portion 43 is unable to move from the radially inner side to the radially outer side of the outer covering portion 26 when the outer side portion 43 moves only in one direction on the contact face 26a.

As shown in FIG. 2 and FIG. 4, multiple (two, in the present embodiment) small protrusions 48 are formed integrally with the radially inner face of the inner side portion 42 (including the inner tenons 44), at intervals in the axial direction so as to slightly project radially inward. Each of the small protrusions 48 forms a part of the insulating member 33 made of a resin material, and is thus elastically deformable. The amount by which each small protrusion 48 protrudes is set such that the insulating member 33 is allowed to be inserted between the coils 32 from the axial direction when the small protrusions 48 are compressed in the radial direction by the inner covering portions 25 of the insulators 17. Each of the small protrusions 48 is formed into a linear shape that extends in the circumferential direction of the motor 1. As shown in FIG. 4 and FIG. 5, each of the small protrusions 48 is formed such that the amount by which the small protrusion 48 protrudes changes gradually along the axial direction. In the present embodiment, each of the small protrusions 48 is formed such that the rate of change in the protrusion amount at a portion which is closer to the axial center of the insulating member 33 than a most protruded portion, is higher than the rate of change in the protrusion amount at a portion closer to the axial end of the insulating member 33.

As shown in FIG. 2, the distance between the small protrusions 48 is substantially equal to the distance between the axial end face of the inner covering portion 25 of the insulator 17 that is attached to the split core 14 (the stator core 13) from one side in the axial direction, and the axial end face of the inner covering portion 25 of the insulator 17 that is attached to the same split core 14 from the other side in the axial direction. Therefore, axial displacement of the insulating member 33 is restricted when the small protrusions 48 are engaged with the axial end faces of the inner covering portions 25 of the insulators 17.

As shown in FIG. 6, the insulating member 33 is formed by injection molding in which a molten resin is injected into a space formed between a pair of dies 51, 52. Specifically, the die 51 has a cavity 53 having a shape that corresponds to a portion of the insulating member 33, the portion extending from the center of the insulating member 33 to one circumferential end of the insulating member 33 as viewed from the axial direction, and the die 52 has a cavity 54 having a shape that corresponds to a portion of the insulating member 33, the portion extending from the center of the insulating member 33 to the other circumferential end of the insulating member 33 as viewed from the axial direction. After the molten resin is injected into the cavities 53, 54, the cured resin is removed by moving the die 51 in one direction. In this way, the insulating member 33 is formed. In other words, the insulating member 33 has such a shape that the insulating member 33 is formed only by the pair of dies 51, 52 without using a sliding die.

Next, the manner of assembling the insulating member according to the present embodiment to the motor will be described. The insulating member 33 is inserted between the adjacent coils 32 from the axial direction of the stator 3 by compressing the small protrusions 48 in the radial direction using the inner covering portions 2. Thus, the insulating member 33 is attached to the stator 3 that is formed by arranging, in a circular manner, the split cores 14 around which the coils 32 are wound via the insulators 17. When the small protrusions 48 are engaged with the axial end faces of the inner covering portions 25, the insulating member 33 is interposed between the adjacent coils 32 in a state where axial displacement of the insulating member 33 is restricted.

As described so far, according to the present embodiment, the following advantageous effects are obtained.
(1) The insulating member 33 is allowed to be inserted between the adjacent coils 32 from the axial direction by compressing the small protrusions 48 in the radial direction. Therefore, the insulating member 33 is easily fitted between the coils 32, and the work of assembling the insulating member 33 to the motor 1 may be automated easily. Because the small protrusions 48 are engaged with the axial end faces of the inner covering portions 25, axial displacement of the insulating member 33 is restricted. Therefore, unlike the related art, it is not necessary to fix a lead wire of each coil accurately to a predetermined position. As a result, it becomes easier to assemble the motor 1.

(2) The contact faces 25a, 42a of the inner covering portion 25 and the inner side portion 42, and the contact faces 26a, 43a of the outer covering portion 26 and the outer side portion 43 are formed to have labyrinth sectional shapes. When a high voltage is applied to the coils 32, insulation breakdown may occur between the wire 31 and the stator core 13. An electric current due to the insulation breakdown often flows into the stator core 13 through the wire 31 and the surface of each insulator 17 without passing through the insulator 17. Therefore, when the contact faces 25a, 42a are formed to have the labyrinth sectional shapes as in the present embodiment, the distance (creepage distance) over which the current flows from the wire 31 to the extending portion 16 of the tooth 12 through the surface of the inner covering portion 25 is longer than that in a case where the contact faces 25a, 42a have linear sectional shapes. Similarly, when the contact faces 26a, 43a are formed to have the labyrinth sectional shapes, the creepage distance over which the current flows from the wire 31 to the core back 15 through the surface of the outer covering portion 26 is made longer. Thus, occurrence of insulation breakdown is suppressed without increasing radial lengths (thicknesses) of the inner covering portion 25 and the outer covering portion 26.

(3) Because the small protrusions 48 are formed such that the amount by which the small protrusions 48 protrude gradually changes along the axial direction, the small protrusions 48 are compressed easily when the insulating member 33 is inserted between the coils 32 from the axial direction. Each of the small protrusions 48 is formed such that the rate of change in the protrusion amount at the portion which is closer to the axial center of the insulating member 33 than the most protruded portion, is higher than the rate of change in the protrusion amount at the portion closer to the axial end of the insulating member 33. Hence, it is possible to insert the insulating member 33 between the coils 32 from the axial direction easily, and to appropriately restrict axial displacement of the insulating member 33.

The above-described embodiment may be modified as follows.

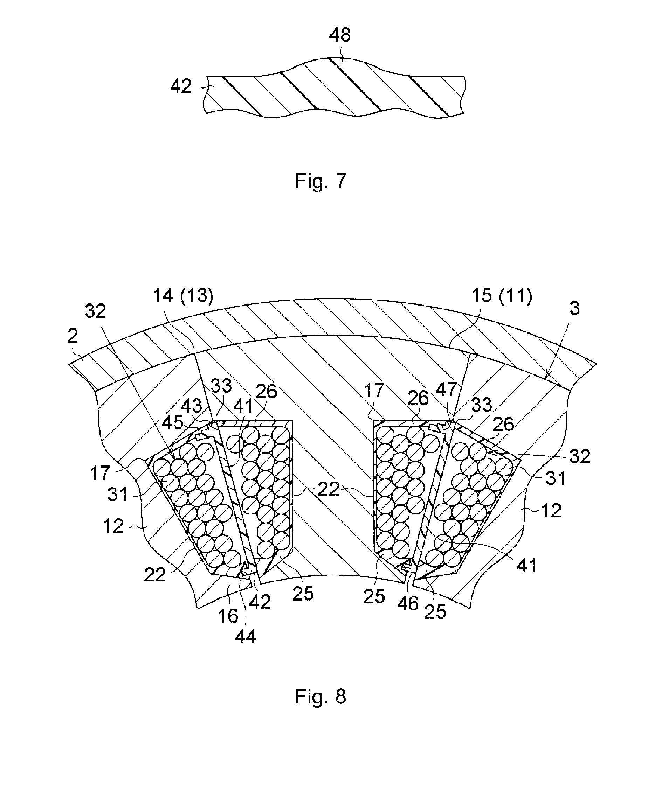

In the above-described embodiment, each of the small protrusions 48 is formed into a linear shape that extends in the circumferential direction of the motor 1. However, the shape of the small protrusions 48 may be, for example, a semicircular shape, and may be changed as appropriate. In the above-described embodiment, each of the small protrusions 48 is formed such that the rate of change in the protrusion amount at the portion which is closer to the axial center of the insulating member 33 than the most protruded portion, is higher than the rate of change in the protrusion amount at the portion closer to the axial end of the insulating member 33. However, as shown in FIG. 7, each of the small protrusions 48 may have a shape symmetrical with respect to the most protruded portion. Moreover, each of the small protrusions 48 may have such a shape that the protrusion amount of the small protrusion 48 changes in a stepwise manner along the axial direction.

In the above-described embodiment, axial displacement of the insulating member 33 is restricted by engaging the small protrusions 48 with the axial end faces of the inner covering portions 25. However, the invention is not limited to this configuration. Axial displacement of the insulating member 33 may be restricted by forming the small protrusions 48 at positions that face the contact faces 25a of the inner covering portions 25 and making the small protrusions 48 come into pressure contact (be frictionally engaged) with the contact faces 25a.

In the above-described embodiment, the small protrusions 48 are formed at the inner side portion 42 of the insulating member 33. However, axial displacement of the insulating member 33 may be restricted by forming the small protrusions at the outer side portion 43 and making the small protrusions engaged with axial end faces of the outer covering portions 26, or making the small protrusions come into pressure contact with the contact faces 26a.

In the above-described embodiment, the small protrusions 48 are formed at the inner side portion 42 of the insulating member 33. However, the small protrusions 48 may be formed at end faces of the inner side portion 42 or the outer side portion 43 in the circumferential direction, so that the small protrusions 48 are compressed in the circumferential direction when the insulating member 33 is inserted between the coils 32.

The above-described embodiment may be modified as shown in FIG. 8, for example. That is, the inner mortice 46 and the outer mortice 47 may be formed only in the inner covering portion 25 and the outer covering portion 26 at the one side of the insulator 17 in the circumferential direction, respectively, and the inner tenon 44 and the outer tenon 45, which project toward the other side in the circumferential direction, may be formed at the inner side portion 42 and the outer side portion 43 of the insulating member 33, respectively.

In the above-described embodiment, the inner tenon 44 and the inner mortice 46 are formed to have rectangular sectional shapes, and the contact faces 25a, 42a of the inner covering portion 25 and the inner side portion 42 are formed into rectangular shapes. However, the invention is not limited to this configuration. The inner tenon 44 and the inner mortice 46 may be formed into, for example, stepped shapes and arc shapes, and the sectional shapes of the inner tenon 44 and the inner mortice 46 may be changed as appropriate. By changing the shapes of the inner tenon 44 and the inner mortice 46 in this way, the insulator 17 and the insulating member 33 are prevented from being damaged by a stress that acts on the inner tenon 44 and the inner mortice 46. The inner tenon 44 and the inner mortice 46 may be formed such that the sectional shapes of the contact faces 25a, 42a are not labyrinth shapes. It is needless to say that the walls of inner mortice 46 need not be entirely in contact with the inner tenon 44. Similarly, the sectional shapes of the outer tenon 45 and the outer mortice 47 (the contact faces 26a, 43a of the outer covering portion 26 and the outer side portion 43) may be changed as appropriate.

In the above-described embodiment, the insulating member 33 may have a shape that requires a sliding die during injection molding of the insulating member 33.

In the above-described embodiment, the stator core 13 formed by arranging the multiple split cores 14 in a circular manner is used. However, the invention is not limited to this. A single-piece stator core that is not split for each of the teeth 12, or a stator core in which the teeth 12 are split from the cylindrical portion 11 may be used.

In the above-described embodiment, the invention is applied to an inner rotor-type motor in which the rotor 4 is arranged radially inward of the stator 3. However, the invention may be applied to an outer rotor-type motor in which the rotor 4 is arranged radially outward of the stator 3. The motor 1 may be used not only as a drive source for an electric power steering system or the like, but also as a drive source for another equipment, or as an electric generator.

## Claims

1. A motor including a stator that has a stator core provided with a plurality of teeth extending in a radial direction, and coils that are formed by winding wires around the teeth via insulators through concentrated winding, wherein each of the insulators includes side face covering portions that cover circumferential side faces of a corresponding one of the teeth, inner covering portions that extend in a circumferential direction from respective radially inner end portions of the side face covering portions, and outer covering portions that extend in the circumferential direction from respective radially outer end portions of the side face covering portions, and a plate-like insulating member is interposed between the coils located next to each other in the circumferential direction, the motor **characterized in that**:
an elastically deformable small protrusion is formed at at least one of an inner side portion of the insulating member, the inner side portion contacting the inner covering portion, and an outer side portion of the insulating member, the outer side portion contacting the outer covering portion; and
the small protrusion is formed such that the insulating member is allowed to be inserted between the coils from an axial direction when the small protrusion is elastically deformed and movement of the insulating member is restricted when the small protrusion is engaged with the insulator.

2. The motor according to claim 1, wherein
contact faces of at least one of the inner covering portions and the inner side portion and/or contact faces of at least one of the outer covering portions and the outer side portion are formed to have labyrinth shapes in a cross section that is perpendicular to the axial direction.
